Europäisches Patentamt

European Patent Office

Office européen des brevets

(19)

(11) Veröffentlichungsnummer : **0 067 367**
**B1**

(12) **EUROPÄISCHE PATENTSCHRIFT**

(45) Veröffentlichungstag der Patentschrift :
01.10.86

(21) Anmeldenummer : 82104844.4

(22) Anmeldetag : 03.06.82

(51) Int. Cl.⁴ : **G 11 B   5/84**

(54) **Magnetisches Richtsystem.**

(30) Priorität : 15.06.81 DE 3123746

(43) Veröffentlichungstag der Anmeldung :
22.12.82 Patentblatt 82/51

(45) Bekanntmachung des Hinweises auf die Patenterteilung : 01.10.86 Patentblatt 86/40

(84) Benannte Vertragsstaaten :
DE FR GB IT NL

(56) Entgegenhaltungen :
EP-A- 0 025 160
DE-A- 2 444 971
FR-A- 1 181 257
FR-A- 1 587 568
GB-A-   902 838
US-A- 3 117 065
US-A- 4 177 442

(73) Patentinhaber : AGFA-GEVAERT Aktiengesellschaft

D-5090 Leverkusen 1 (DE)

(72) Erfinder : Greiner, Joachim, Dr.
Ulrich-von-Hassel-Strasse 15
D-8026 Ebenhausen (DE)
Erfinder : Gärtner, Eberhard
Schultheiss Strasse 16
D-8000 München 71 (DE)

EP 0 067 367 B1

Jouve, 18, rue St-Denis, 75001 Paris, France

# 0 067 367

## Beschreibung

Die Erfindung betrifft ein System, das hochkoerzitive magnetische Partikel während der Herstellung von magnetischen Speicherschichten ausrichtet.

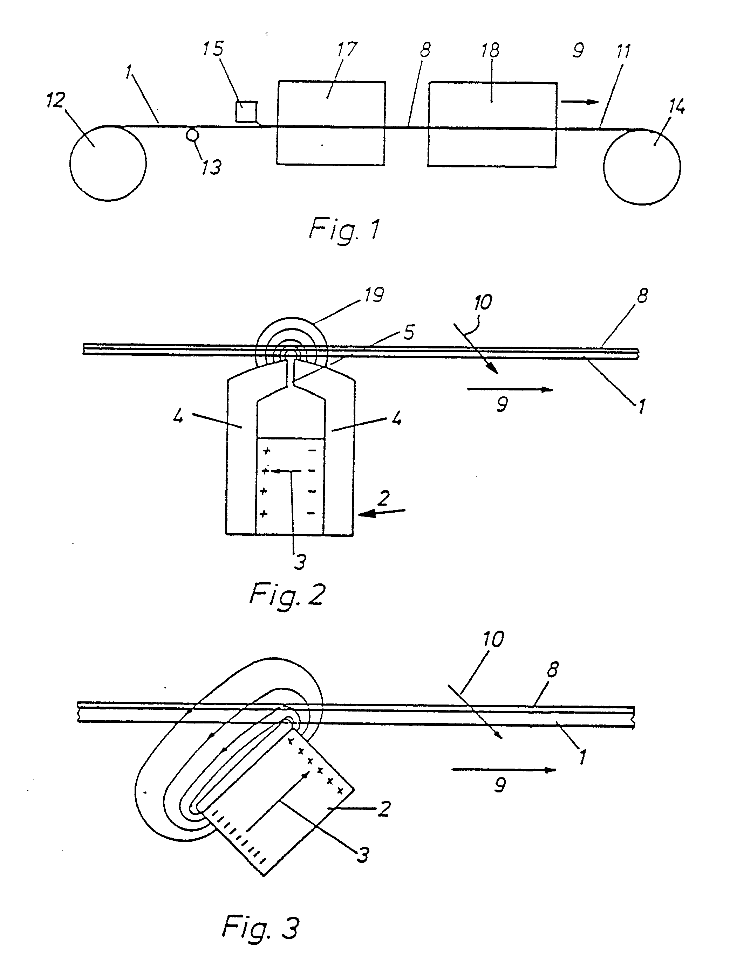

Die Technik der Herstellung von magnetischen Speicherschichten ist bekannt und wird an Hand von Fig. 1 erläutert. Eine unmagnetische Folie 1, z. B. aus Polyaethylenterephthalat, wird von einer Vorratsspule 12.über Leitelemente 13 zu einer Aufwickelspule 14 geführt. Mit dem Gießer 15 wird auf die Folie 1 die Magnetsuspension 8 aufgetragen. Die beschichtete Folie passiert noch im flüssigen Zustand das Richtsystem 17 und durchläuft dann eine Trockeneinrichtung 18. Die Suspension besteht aus einem bindemittelhaltigen Lack mit Lösemittel und magnetischen Teilchen, wie Eisenoxyde, CrO2 oder Metallpulver. Das Lösemittel verdunstet in der Trockeneinrichtung, so daß aus der Magnetsuspension die Magnetschicht 11 entsteht. Die Teilchen der Suspension besitzen heute fast ausschließlich eine ausgeprägte magnetische Vorzugsachse, die auf der Formanisotropie und/oder der Kristallanisotropie beruht. Vorzugsweise kommen längliche Teilchen zur Anwendung. Das Richtsystem erzeugt eine Vorzugsachse der Magnetisierung in der Bandlaufrichtung.

Als Richtsystem kann eine Magnetisierungsspule, durch die die begossene Folie geführt wird, dienen, wie es in FR No. 100 8218 und in der Zeitschrift Hochfrequenztechnik und Elektroakustik, April 1963, Bd. 72, Heft 2, Seite 54-63 beschrieben ist. Eine solche Spule besitzt den Vorteil eines ausgedehnten homogenen Feldes in Bandlaufrichtung, das durch Änderung des Spulenstromes den durch die Suspension vorgegebenen Bedingungen angepaßt werden kann. Der große Nachteil der Anwendung einer Spule besteht darin, daß sie in einer hochexplosiven Atmosphäre betrieben werden muß. Dieser Nachteil hat dazu geführt, daß heute vorzugsweise Richtsysteme, die aus Permanentmagneten aufgebaut sind, benutzt werden.

Die einfachsten Formen von Permanentmagneten, Hufeisen- und Stabmagneten, zur Ausrichtung von magnetischen Pigmentteilchen, werden in US 2 796 359 beschrieben.

Ein häufig eingesetztes und lange bekanntes System (US 27 11 901) verwendet Magnetleisten, die sich mit gleichnamigen Polen gegenüberstehen. Auf der Symmetrielinie wird die Folie mit der aufgegossenen Suspension geführt. Das auf ein Pigmentteilchen wirkende Magnetfeld ändert während des Durchlaufs des Teilchens die Richtung um 180°. Aufgrund dieses Feldverlaufs wird eine gute Ausrichtung nur dann erzielt, wenn der Maximalbetrag des Richtfeldes wesentlich größer als das Koerzitivfeld der Pigmentteilchen ist. Fig. 2 der Patentschrift zeigt den Verlauf der auf die Teilchen einwirkenden Längskomponente des Richtfeldes. Das resultierende Querfeld ist Null. Mit einem solchen Richtsystem aus Bariumferritmagneten lassen sich Maximalfeldstärken von etwa 800 A/cm erzeugen. Dies reicht zur Ausrichtung von Pigmenten mit Koerzitivfeldern zwischen 100 und 400 A/cm aus. Bei Metallpigmenten mit Koerzitivfeldstärken von etwa 800 A/cm ist die Ausrichtung mit einem solchen System unbefriedigend.

In DE-OS 24 44 971 ist eine Richtanordnung beschrieben, die mehrere derartige Systeme hintereinander wirken läßt. Dadurch soll eine senkrechte Feldkomponente, die der Richtmagnet besitzen soll, korrigiert werden. Bevorzugt wird dies dadurch erreicht, daß die Folgepaare der gleichpoligen Richtmagnetleisten geometrisch verschieden aufgebaut sind.

Auch in US-A-3 117 065 ist eine aus mehreren Systemen zusammengesetzte· Richtanordnung beschrieben, bei der das beschichtete Magnetband zunächst ein Magnetfeld passiert, das einen zur Bandlaufrichtung parallelen Feldverlauf hat und das die magnetischen Pigmente schon teilweise longitudinal in Bandlaufrichtung·ausrichtet. Danach wird das Magnetband an einer mit hoher Frequenz rotierenden Trommel vorbeigeführt, auf deren Außenseite jeweils wechselpolig aufeinanderfolgende Magnetstreifen aufgebracht sind, die mit ihrem charakteristischen stark gekrümmten zeitlich schnell wechselnden Feldlinienverlauf eine Art magnetisches Schütteln der Pigmente, die sich dadurch weiter in Bandlaufrichtung eindrehen lassen, bewirkt. Darauf folgt ein weiteres parallel zur Bandlaufrichtung verlaufendes Magnetfeld, das das Eindrehen der Pigmente weiterführt. Auch dieses System ist, abgesehen von seinem hohen technischen Aufwand, für die Ausrichtung hochkoerzitiver Pigmente ungeeignet.

Zur Erzeugung einer magnetischen Vorzugsrichtung in magnetischen Speicherschichten wurde auch das Spaltfeld eines magnetischen Kreises vorgeschlagen (GB 902 838). Entscheidend ist in dieser Patentschrift die Angabe, daß durch die Einwirkung des Spaltfeldes des magnetischen Kreises auf die beweglichen magnetisierbaren Teilchen diese vom Spaltfeld in die Vorzugsrichtung gedreht werden sollen, in der die Magnetisierung des aufzuzeichnenden Signals liegen soll. Unerheblich ist, ob das Spaltfeld durch Strom oder Permanentmagnete erzeugt wird. Angaben über die Stärke des Spaltfeldes werden nicht gemacht.

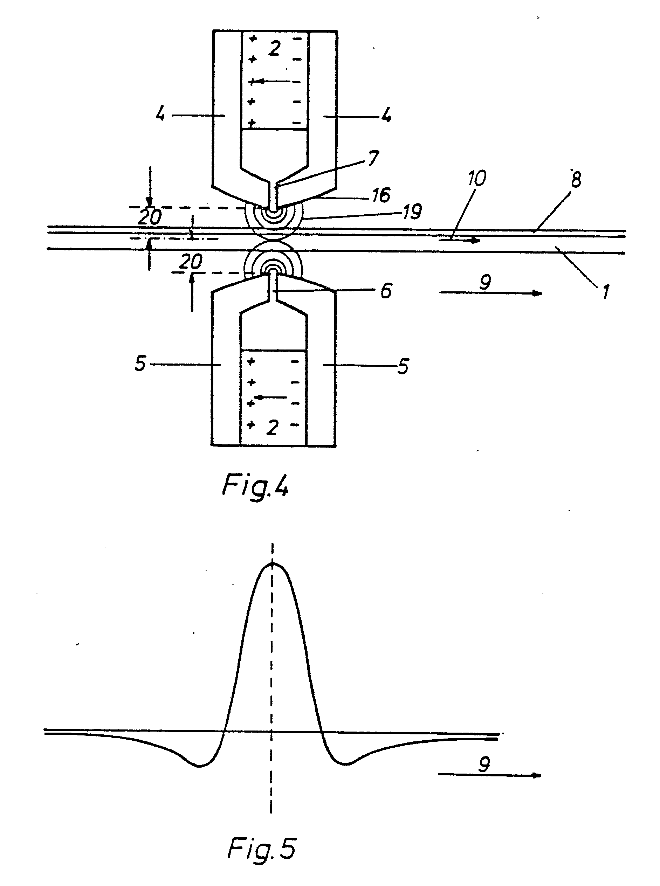

Das Spaltfeld eines Magnetkreises wird in der Magnetbandherstellung auch zu anderen Zwecken verwendet. Z. B. dient es dazu, die Suspension über die Gießbahn gleichmäßig zu verteilen (DE-OS 23 46 390) oder, um die wulstartigen Überhöhungen an den Rändern auszuziehen (DE-OS 29 36 035). Beide Anwendungen nutzen die Anziehungskraft, nicht das Drehmoment, des Magnetfeldes auf die Pigmentteilchen, die beim Richtverfahren nicht von Bedeutung ist. In DE-OS 23 46 390 S. 4, letzter Absatz wird ausdrücklich hervorgehoben, daß es sich nicht um die Aufgabe der Ausrichtung handelt. In DE-OS 29 36 035 wird das Pigment durch das Spaltfeld festgehalten und durch die Bewegung der Folie nach

2

außen gedrückt. Beim Richten hingegen kommt es auf das vom Feld ausgeübte Drehmoment an. Bate und Dunn beschreiben in den IEEE Trans. on Magnetics Vol Mag 16 (1980) Nr. 5, Seite 1124-25 Richtsysteme, bei denen zwei magnetische Kreise mit ihren Spaltstreufeldern kombiniert werden. Dabei wird durch weichmagnetische Leitelemente das Magnetfeld im ausklingenden Teil des Richt-magnetsystems, das eine dem Hauptfeld entgegengesetzte Richtung besitzt, weitgehend abgeschwächt. Fig. 4 des Artikels zeigt ein derartiges Doppelkreissystem. Die begossene Folie passiert längs der Symmetrielinie die beiden Magnetkreise. Zur Abschwächung des ausklingenden Feldes dienen die weichmagnetischen Leitelemente. Der Feldverlauf der Längskomponente auf der Symmetrieebene ist ebenfalls in Fig. 4 desselben Artikels dargestellt. um die Güte der Ausrichtung der Pigmentteilchen zu beurteilen, werden in der Technik folgende Kenngrößen verwandt : Veloureffekt, das Verhältnis Remanenz zur Sättigung in Längsrichtung des Bandes $M_R/M_S$ und das Verhältnis der remanenten Magnetisierung in Längs- und Querrichtung $M_{R//}/M_{R\perp}$.

Der Veloureffekt beruht darauf, daß es nicht immer gelingt, die Pigmentteilchen in Bandlaufrichtung und parallel zur Schichtoberfläche zu orientieren. Die magnetische Vorzugsachse ist dann zu dieser Richtung geneigt. Durch die Schräglage der Vorzugsachse wird durch das Aufzeichnungsfeld mit seinem näherungsweise kreisförmigen Feldlinienverlauf eine unterschiedliche remanente Magnetisierung erreicht, je nachdem in welcher Richtung die magnetische Schicht das Aufzeichnungsfeld passiert. Dies liegt daran, daß der Winkel zwischen der Feldrichtung an der abspielenden Kante und der Vorzugsachse für die beiden Transportrichtungen des Bandes verschieden ist. Dadurch bedingt ergibt sich insbesondere bei der Abtastung kurzer Wellenlängen (etwa 5 µm) für entgegengesetzte Aufzeichnungsrichtungen ein verschiedener Pegel. Der Veloureffekt wird durch den Logarithmus des Verhältnisses der beiden Pegel charakterisiert :

$$V \text{ (dB)} = 20 \log P1/P2$$

Bei einer Wellenlänge von 4 µm besagt ein Wert von V = 2 dB, daß der Veloureffekt stark ist. Als Maß für die Streuung der Vorzugsachsen der Teilchen um die Bandlaufrichtung verwendet man die Werte $M_R/M_S$ bzw. $M_{R//}/M_{R\perp}$. Zur Bestimmung von $M_R/M_S$ mißt man in Richtung der Vorzugsachse die Remanenz $M_R$ und die Sättigungsmagnetisierung $M_S$. Das Verhältnis $M_R/M_S$ gibt die Güte der Anisotropie an. Je mehr sich das Verhältnis dem Wert 1 nähert, um so besser sind die Teilchen orientiert. Da die absolute Sättigung nie ganz erreicht wird, muß beim Vergleich verschiedener Proben die Feldaussteuerung angegeben werden. Der $M_R/M_S$-Wert besitzt den Nachteil, daß er heute praktisch nur zwischen 0,7 und 0,96 variiert. Es muß sehr genau gemessen werden, um Unterschiede nachzuweisen. Zur Bestimmung von $M_{R//}/M_{R\perp}$ (Orientation ratio) mißt man die Remanenz $M_{R//}$ in Richtung der Vorzugsachse und die Remanenz $M_{R\perp}$ in der dazu senkrechten in der Schichtebene liegenden Richtung. Diese Größe besitzt den Vorteil, daß der apparative Aufwand zu ihrer Messung geringer ist als der Aufwand zur Bestimmung von $M_R/M_S$. Dafür wird in der senkrechten Richtung durch den großen Entmagnetisierungsfaktor quermagnetisierter länglicher Teilchen praktisch nie die Sättigungsremanenz erreicht. $M_{R//}/M_{R\perp}$ ist noch stärker von der Aussteuerungsfeldstärke abhängig als $M_R/M_S$. Die bisherigen Ausrichtsysteme besitzen eine Anzahl von Mängeln, die sich besonders heute bei der Herstellung von Speichermaterialien mit Koerzitivfeldern über 500 A/cm störend bemerkbar machen. Metallpulverpigmente mit Koerzitivfeldern von über 800 A/cm werden zur Zeit gerade auf dem Markt eingeführt. Diese Werte werden in Zukunft noch wesentlich steigen (1 600-4 000 A/cm). Da das Gesamtkoerzitivfeld $H_C$ nur einen mittleren Wert der Koerzitivfelder der Teilchen darstellt, werden zur Ausrichtung der Teilchen höhere Felder als das mittlere Koerzitivfeld $H_C$ benötigt. Die Herstellung so starker Felder in einer explosionsgefährdeten Umgebung erfordert einen erheblichen technischen Aufwand, wenn mit stromdurchflossenen Magnetisierungsspulen gearbeitet werden soll. Beim Einsatz von Permanentmagneten bereitet es große Schwierigkeiten, die für die Ausrichtung von hochkoerzitiven Pigmenten erforderlichen starken Felder zu erzeugen. Es ist daher die Aufgabe der Erfindung, ein Richtsystem zu schaffen, mit dem sich hochkoerzitives Speichermaterial mit einer hohen Güte der Anisotropie in Bandlaufrichtung herstellen läßt.

Die Aufgabe wurde erfindungsgemäß gelöst durch ein Magnetsystem zur Ausrichtung der magnetischen Vorzugsachsen von Pigmentteilchen einer auf einen Schichtträger aufgetragenen, magnetischen und bindemittelhaltigen Dispersion an Gießmaschinen, bestehend aus Permanentmagneten und weichmagnetischen Elementen zur Leitung des magnetischen Flusses, wobei das Richtsystem aus zwei Teilsystemen besteht, wobei das Feld des ersten Richtsystems eine Stärke zwischen 1 600 und 16 000 A/cm aufweist und sich auf einen Querschnitt von maximal 5 × 5 mm² konzentriert, wobei die Feldlinien einen stark gekrümmten Verlauf und einen starken Feldgradienten aufweisen, und das Feld bei am Spalt anliegender Folie zu einer Hauptrichtung der Magnetisierungsvektoren der Teilchen führt, die schräg zur Bandlaufrichtung orientiert ist und das Feld des nachfolgenden zweiten Teilsystems eine Stärke zwischen 400 und 2 400 A/cm und in Längsrichtung eine Ausdehnung von mindestens 0,5 cm und im wesentlichen eine Längskomponente aufweist, die parallel zur Folienlaufrichtung orientiert ist und die Magnete spiegelbildlich zur Folienlaufrichtung angeordnet sind, wobei diese einen Abstand zur Folie besitzen.

Durch das erste Feld werden die Pigmentteilchen so magnetisiert, daß ihre Magnetisierungsvektoren nicht mehr als 90° von einer Hauptrichtung abweichen. Ein solcher Zustand entspricht dem remanenten Zustand eines vorher gesättigten Materials. Die Hauptrichtung der Magnetisierung liegt erfindungsgemäß durch die Art des Richtfeldes nicht parallel zur Schichtoberfläche und nicht parallel zur Bandlaufrichtung, besitzt aber eine Komponente in Folienlaufrichtung. Die Magnetisierungsvektoren dieser Teilchen können außerdem durch Drehung der Teilchen eine Bündelung in der Hauptrichtung erfahren. Um diese Zustände zu erreichen, muß erfindungsgemäß das maximale Magnetfeld des ersten Richtsystems mindestens doppelt so groß wie das Koerzitivfeld der Pigmentteilchen sein.

Der zweite Teil dieses Richtsystems hat erfindungsgemäß die Aufgabe, die Magnetisierungsvektoren des Bündels durch mechanische Drehung der Teilchen in eine Lage parallel zur Bandlaufrichtung überzuführen. Das wird durch das in diesem zweiten Teil des Richtsystems wirkende Magnetfeld erreicht, das in dem die Eindrehung bewirkenden Feldbereich nur eine Längskomponente in Folienlaufrichtung aufweist. Das System ist spiegelsymmetrisch zum Folienlaufband aufgebaut.

Die Zeit, die die Teilchen der Feldeinwirkung unterliegen, hängt beim Gießprozeß von der Feldausdehnung und der Gießgeschwindigkeit ab. Diese Zeit muß der Zeit angepaßt werden, die erforderlich ist, um die Teilchen in die Laufrichtung der Folie einzudrehen. Diese Eindrehzeit liegt je nach Pigmenttyp, Lacksorte (Viskosität) und Feldstärke zwischen 0,01 und 0,1 Sekunden. Zur Abschätzung der Eindrehzeiten für eine bestimmte Gießlösung und eine bestimmte Anordnung des zweiten Teils des Richtsystems wird nach einem der vorstehend angegebenen Meßmethoden die Ausrichtgüte in Abhängigkeit von der Foliengeschwindigkeit gemessen. Dabei kann der zweite Teil des Richtsystems gemäß den Unteransprüchen aus Teilstücken aufgebaut sein, wobei die Ausdehnung des Feldes eines solchen Teilstückes in Längsrichtung nicht unter 0,5 cm absinken sollte. Außerdem soll mit zunehmender Entfernung vom Gießer die maximale Feldstärke der einzelnen Teilmagnetsysteme monoton abnehmen. Insbesondere soll die Maximalfeldstärke eines Teilmagnetsystems jeweils nur 20 % der Maximalfeldstärke des vorangegangenen Systems betragen.

Im folgenden werden Ausführungsbeispiele der Erfindung an Hand der folgenden Figuren beschrieben. Es zeigt

Figur 1   eine schematische Darstellung der Magnetbandherstellung,

Figur 2   ein erstes Teilsystem mit permanenten Magneten und magnetischen Jochen

Figur 3   ein erstes Teilsystem aus einem Permanentmagnet, der zur Folienrichtung gekippt ist

Figur 4   ein zweites Teilsystem, bestehend aus zwei geschlossenen magnetischen Kreisen, die symmetrisch zur Folie angeordnet sind

Figur 5   den Feldverlauf auf der Symmetrielinie des Richtsystems nach Fig. 4

Figur 6   zweites Teilsystem mit magnetischer Platte und Schlitz

Figur 7   zweites Teilsystem, bei dem sich zwei gleichnamige Magnetpole gegenüberstehen.

Ein Beispiel für den ersten Teil des Richtsystems zur Erzeugung eines hohen inhomogenen magnetischen Feldes zeigt Fig. 2 im Querschnitt. Es besteht aus einem leistenförmigen Permanentmagneten 2 mit magnetischer Vorzugsachse 3, der von zwei leistenförmigen magnetischen Jochen 4/5 umfaßt wird. Diese Joche bestehen aus einem Material mit einer Sättigungsmagnetisierung über 1,8 Tesla. Sie bilden einen Spalt 5 der 30 μm bis 2 mm breit sein kann. Über den Spalt stellen sich inhomogene Felder 19 mit einer Stärke von ~ 5 000 A/cm ein. Während sich die Folie 1 mit der Schicht 8 in direktem Kontakt mit dem Spalt in Pfeilrichtung 9 bewegt, greift das Spaltfeld 19 durch die Folie auf die Suspension durch.

Dadurch erhält die Schicht eine magnetische Vorzugsachse 10, die im Mittel schräg zur Bandlaufrichtung 9 liegt.

Zur Erzeugung des starken inhomogenen Feldes des ersten Teils des Richtsystems kann z. B. auch die Kante eines leistenförmigen quermagnetisierten Permanentmagneten genutzt werden.

Die Wirkung einer solchen Kante ist in Fig. 3 dargestellt.

Für den zweiten Teil des Richtsystems, das sich wieder aus einem oder mehreren Teilsystemen aufbauen kann, werden sowohl bekannte als auch erfinderische Permanentmagnetsysteme verwendet.

Ein System ist in Fig. 4 dargestellt. Es besteht aus zwei Magnetkreisen, die spiegelbildlich zur beschichteten Folie (1, 8) angeordnet sind und deren Streufelder 19 in gleicher Richtung wirken. Ein Einzelkreis ist im Prinzip wie der erste Teil des Richtsystems (Fig. 2) aufgebaut. Im Gegensatz zum ersten Teil des Richtsystems besitzen die Spalte 6/7 des zweiten Teils des Richtsystems einen gewissen Abstand 20 von der Folie bzw. der aufgegossenen Suspension. Der Abstand 20 soll mindestens 3 mm betragen. Durch diesen Abstand ergibt sich in der Mitte der Anordnung ein maximales Längsfeld von mindestens 800 A/cm. Die erforderliche Ausdehnung des Feldes 19 von 2-3 cm Länge erreicht man durch die gewölbte Oberfläche 16 der weichmagnetischen Joche 4/5. Als permanent magnetische Materialien lassen sich z. B. Bariumferrite oder Seltenerdmagnete verwenden. Die Fig. 5 zeigt den Feldverlauf der Längskomponenten auf der parallel zur Folienebene verlaufenden Symmetrielinie eines solchen Magnetsystems. Die Längskomponente besitzt in der Mitte des Systems ein starkes Maximum. Rechts und links von diesem befinden sich kleine Nebenmaxima mit entgegengesetzter Richtung. Dabei stimmt die Richtung des Hauptmaximums der Längskomponente des zweiten Teiles des Richtsystems mit der Feldrichtung auf der Symmetrielinie des Spaltes des ersten Teiles des Richtsystems überein. Die Beträge der Nebenmaxima sind wesentlich kleiner als der Betrag des Hauptmaximums, so daß sie vernachlässigt werden können.

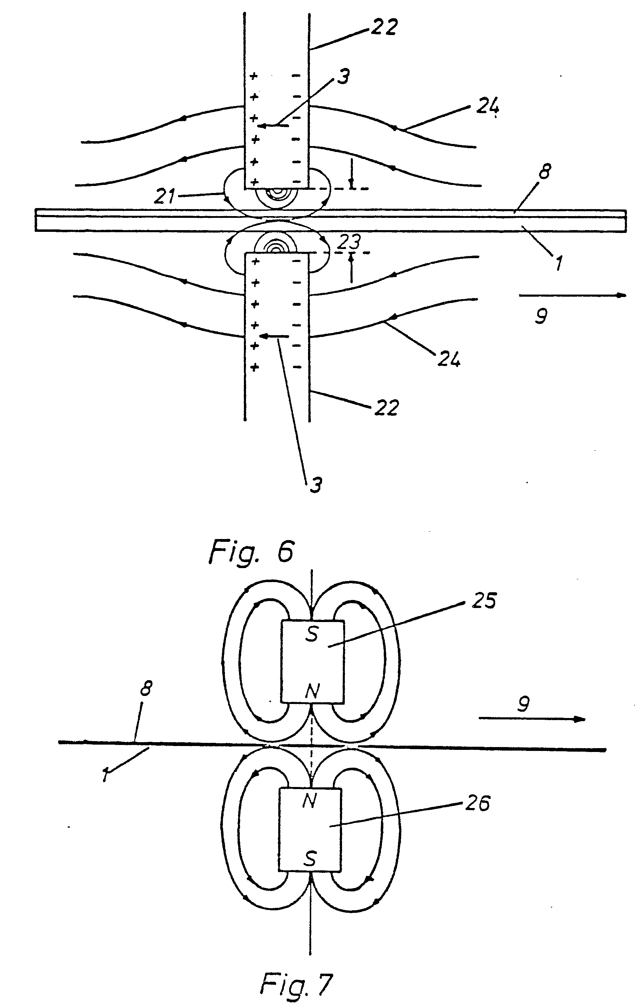

Eine weitere Anordnung für den zweiten Teil des Richtsystems ist in Fig. 6 dargestellt. Eine permanentmagnetische Platte 22 ist in Richtung 3 quermagnetisiert. Sie besteht aus magnetisch anisotropem Material mit einer hohen Kristallanisotropie, das eine Magnetisierung senkrecht zur Oberfläche erlaubt. Diese Oberflächen tragen dann die magnetische Beladung mit positiven und negativen Polen. Die Platte besitzt einen Schlitz 23 von etwa 6 mm, durch dessen Mitte die Folie 1 mit der Schicht 8 läuft. Der Verlauf der Längskomponenten ist qualitativ der gleiche wie in Fig. 5. Die Feldlinien 21 gehören zum Bereich, der das Hauptmaximum der Längskomponente liefert, während die Feldlinien 24 die Entstehung der Nebenmaxima mit entgegengesetzter Richtung erkennen lassen.

Erfindungsgemäß können die in den Figuren 4 und 6 gezeigten Systeme zur Realisierung des zweiten Teilsystems auch mehrmals hintereinander folgen, wobei die Feldrichtung im Hauptmaximum unverändert bleibt.

Als zweiten Teil des Richtsystems kann man auch das in Fig. 7 dargestellte System, bei dem sich zwei gleichnamige Pole gegenüberstehen, einsetzen. Es besitzt auf seiner Symmetrielinie parallel zur Folienebene zwei betragsmäßig gleiche Extremwerte der Längskomponente mit entgegengesetztem Vorzeichen. Der Vorteil dieses Systems besteht darin, daß durch die gegenüberstehenden gleichnamigen Pole das Feld aus dem dazwischenliegenden Raum herausgedrückt wird und sich dadurch ein ausgedehnterer Feldbereich längs der Folie ergibt. Auch bei Realisierung des zweiten Teilsystems durch die Anordnung der gegenüberliegenden gleichnamigen Pole kann sich das zweite Teilsystem aus mehreren Einzelsystemen mit gegenüberliegenden gleichnamigen Polen aufbauen.

## Ausführungsbeispiel

Für experimentelle Untersuchungen zur Erfindung wurde eine Technikumsgießmaschine, wie sie im Prinzip Fig. 1 darstellt, benutzt. Die Foliengeschwindigkeit betrug bei allen Versuchen etwa 15 m/Minute. Als Auftragssystem 15 für die Suspension 8 diente ein Schlitzgießer, der keinerlei magnetische Elemente enthielt, so daß vor dem Eintreten der Suspension in das magnetische Richtsystem 17 keine äußeren magnetischen Kräfte auf die Teilchen gewirkt haben.

Für das aus zwei Teilen bestehende Richtsystem standen die in der folgenden Liste aufgeführten Einzelsysteme zur Verfügung. Die entsprechenden Nummern dienen zur Kennzeichnung bei den folgenden Ausführungen. Als Permanentmagnetwerkstoff diente entweder Bariumferrit mit der Typenbezeichnung 300 K oder die Co-Sm-Legierung Secolit der Thyssen-Edelstahlwerke Dortmund. Als magnetisches Flußleitungsmaterial dienten weichmagnetische Fe-Legierungen. Es folgen die charakteristischen Angaben zu den Einzelsystemen.

## Einzelsystem 1 (Einkreissystem)

Dieses Einzelsystem wird ausschließlich für den ersten Teil des Gesamtsystems eingesetzt. Es ist im Querschnitt in Fig. 2 dargestellt. Der Querschnitt des Permanentmagneten 2 betrug 3 × 24 mm, wobei er über die kurze Kante magnetisiert war. Die Außenabmessungen der Joche 4/5 liegen bei 14 × 40 mm². Es wurden zwei Einzelmagnetsysteme dieses Typs mit verschiedenen Spaltbreiten 5 benutzt.

1.1 Spaltbreite 0,8 mm
1.2 Spaltbreite 0,4 mm

Die folgenden Einzelsysteme (2 und 3) werden ausschließlich für den zweiten Teil des Gesamtsystems eingesetzt. Sie sind alle spiegelsymmetrisch zum Folien- bzw. Schichtlauf aufgebaut, so daß dort nur eine Längskomponente des Richtfeldes wirkt, während sich die Querkomponenten kompensieren.

## Einzelsystem 2 (Zweikreissystem)

Das Zweikreissystem ist im Prinzip in Fig. 4 dargestellt. Als Permanentmagnete wurden Ferritstäbe mit dem Querschnitt 12 × 19 mm² verwendet, die über die kurze Achse magnetisiert waren. Die Gesamtbreite der Joche betrug 24 mm. Die Spaltbreite lag bei 0,8 mm. Es standen zwei Systeme mit unterschiedlichen Feldstärken zur Verfügung.

| Bezeichnung | Gesamthöhe des Permanentmagneten (mm) | Maximale Feldstärke A/cm |
|---|---|---|
| 2.1 | 76 | 1 655 |
| 2.2 | 38 | 920 |

**0 067 367**

Charakteristisch für dieses System ist der in Fig. 5 gezeigte Feldverlauf mit einem starken Feldmaximum in der Mitte und den zwei schwachen Nebenmaxima entgegengesetzter Feldrichtung am Rande.

Einzelsystem 3 (Gegenüberstehende gleichnamige pole)

Bestehend aus spiegelbildlich angeordneten Magnetleisten 25, 26, die sich mit gleichnamigen Polen gegenüberstehen. Dieses System ist im Prinzip in Fig. 7 dargestellt. Es sind hier auch zwei Anordnungen zur Erprobung gekommen, die sich im magnetischen Material und Querschnitt wesentlich unterscheiden.

| Bezeichnung | Magnet-material | Querschnitt breit x hoch mm | Abstand mm | Maximale Feldstärke A/cm |
|---|---|---|---|---|
| 3.1 | Ferrit | 25 x 40 | 8 | 920 |
| 3.2 | Co-Sm | 18 x 6 | 8 | 2 210 |

Die Ausrichtung hängt außer vom Richtsystem von der verwendeten Suspension ab. Sowohl das Pigment als auch der Lack haben entscheidenden Einfluß. Folgende zwei verschiedene Suspensionen wurden geprüft :

| Pigment-typ | Pigment-material | Koerzitiv-feld A/cm | Viskosität cpi | Disper-gierung | Teil-chen-länge $\mu m$ |
|---|---|---|---|---|---|
| A | $Fe_3O_4$ | 751 | | schwierig | 0,7 |
| B | Fe | 844 | 2 500 | gut | 0,3 |

Die Güte der Ausrichtung wird durch die vorne beschriebenen Meßgrößen $M_R/M_S$ ; $M_{R//}/M_{R\perp}$ beschrieben. Die Feldaussteuerung zur Messung der ersten beiden Größen betrug 3 200 A/cm.
Die nachfolgenden Tabellen 1 und 2 zeigen im oberen Teil jeweils die Ausrichtung durch eines der Einzelsysteme und im zweiten Teil die mit der erfindungsgemäßen Kombination erreichten Ergebnisse.

(Siehe Tabellen Seite 7 f.)

6

Tabelle 1

Pigmenttyp : B

| Richtsystem | | | $M_{R\parallel}/M_S$ | $\dfrac{M_{R\perp}}{M_S}$ | $\dfrac{M_{R\parallel}}{M_{R\perp}}$ |
|---|---|---|---|---|---|
| 1. Teil | 2. Teil | Abstand mm | | | |
| Einzelsysteme | | | | | |
| ohne | ohne | | 0,665 | 0,563 | 1,255 |
| 1.1 | | 0 | 0,664 | 0,594 | 1,216 |
| | 3.1 | 8 | 0,729 | 0,535 | 1,538 |
| | 3.1 | 12 | 0,716 | 0,547 | 1,511 |
| | 3.1 | 20 | 0.707 | 0,557 | 1,364 |
| | 2.1 | 7 | 0,764 | 0,506 | 1,419 |
| | 3.2 | 8 | 0,795 | 0,480 | 1,878 |
| Erfindungsgemäße Kombinationen | | | | | |
| ← 1.1 | ← 3.1 | 8 | 0,779 | 0,480 | 1,903 |
| → 1.1 | ← 3.1 | 8 | 0,779 | 0,486 | 1,915 |
| ← 1.1 | ← 2.1 | 7 | 0,799 | 0,471 | 1,950 |
| → 1.1 | ← 2.1 | 7 | 0,797 | 0,471 | 1,925 |
| ← 1.1 | ← 3.2 | 8 | 0,798 | 0,477 | 1,967 |
| ← 1.1 | ← 2.1 + 3.2 | 7 | 0,802 | 0,488 | 1,852 |

Tabelle 2

Pigmenttyp : A

| Richtsystem | | | $M_{R\parallel}/M_S$ |
|---|---|---|---|
| 1. Teil | 2. Teil | Abstand mm | |
| Einzelsystem | | | |
| ohne | ohne | | 0,64 |
| 1.1 | − | 0 | 0,68 |
| 1.2 | − | 0 | 0,68 |
| | 3.1 | 8 | 0,645 |
| | 2.1 | 7 | 0,70 |
| 1.1 | 3.1 | 8 | 0,72 |
| 1.2 | 3.1 | 8 | 0,715 |
| 1.2 | 2.1 | 7 | 0,73 |
| 1.2 | 2.1+2.2 | 7 | 0,74 |

0 067 367

Als Ergebnis aus den Tabellen ist festzustellen, daß sich mit dem aus zwei Teilen bestehenden, erfindungsgemäßen Systemen bessere Ausrichtungen als mit einem System nach dem Stand der Technik erzielen lassen. $M_{R\prime\prime}/M_S$-Werte sind stets höher $M_{R\perp}/M_S$-Werte sind stets niedriger, womit sich eine bessere Anisotropie der Pigmentteilchen einer Magnetschicht ergibt.

**Patentansprüche**

1. Magnetische Anordnung zur Ausrichtung der magnetischen Vorzugsachsen von Pigmentteilchen einer auf einen Schichtträger aufgetragenen magnetischen, bindemittelhaltigen Dispersion in Laufrichtung des Schichtträgers an Gießmaschinen, bestehend aus Permanentmagneten und weichmagnetischen Elementen zur Leitung des magnetischen Flusses, welche aus einer Kombination von zwei Richtsystemen zusammengesetzt ist, wobei das eine Richtsystem von einer Seite durch den Schichtträger auf die Dispersion einwirkt und einen stark gekrümmten Verlauf der magnetischen Feldlinien hat und wobei das andere Richtsystem spiegelbildlich zur Laufrichtung des Schichtträgers angeordnet ist und im wesentlichen parallel zur Laufrichtung des Schichtträgers verlaufende Feldlinien hat, dadurch gekennzeichnet, daß
— als erstes Richtsystem auf die Dispersion das Feld eines einseitig angeordneten Magneten einwirkt, welches eine Stärke zwischen 1 600 und 16 000 A/cm aufweist, mindestens doppelt so groß ist wie das Koerzitivfeld der Pigmentteilchen und sich auf einen Querschnitt von maximal $5 \times 5$ mm² konzentriert, wobei die Feldlinien einen starken Feldgradienten aufweisen und das Feld bei am Spalt anliegenden Schichtträger zu einer Hauptrichtung der Magnetisierungsvektoren der Teilchen führt, die schräg zur Laufrichtung des Schichtträgers orientiert ist in einer Ebene, die durch die Laufrichtung des Schichtträgers und die Schichtnormale festgelegt ist und
— das nachfolgende zweite Richtsystem mit einem parallel zur Laufrichtung einwirkenden Magnetfeld eine Feldstärke zwischen 400 und 2 400 A/cm und in Laufrichtung des Schichtträgers eine Ausdehnung von mindestens 5 mm aufweist und die spiegelbildlich zur Laufrichtung des Schichtträgers angeordneten Magnete einen Abstand von mindestens 3 mm zum Schichtträger besitzen.
2. Magnetsystem nach Anspruch 1 dadurch gekennzeichnet, daß der erste Teil des Richtsystems aus einem stabförmigen Permanentmagneten besteht.
3. Magnetsystem nach Anspruch 1 dadurch gekennzeichnet, daß das Feld des zweiten Teilsystems mit der Richtung der Längskomponenten auf der Spaltsymmetrieebene des ersten magnetischen Teilsystems übereinstimmt.
4. Magnetsystem nach Anspruch 3 dadurch gekennzeichnet, daß die zweite Feldhälfte des zweiten Teilsystems in einem Bereich angeordnet ist, in dem die Fixierung der Pigmentteilchen bereits erfolgt ist.
5. Magnetsystem nach Anspruch 1 bis 4 dadurch gekennzeichnet, daß das zweite Teilrichtsystem zur Verlängerung der Feldeinwirkung aus zwei oder mehreren Einzelsystemen aufgebaut ist.
6. Magnetsystem nach Anspruch 5 dadurch gekennzeichnet, daß die Feldmaxima der Einzelsysteme des zweiten Teiles des Richtsystems mit zunehmender Entfernung vom Gießer monoton abnehmen.
7. Magnetsystem nach Anspruch 5 bis 7 dadurch gekennzeichnet, daß das Feldmaximum eines Einzelsystems mit zunehmender Entfernung nur 20 % des Feldmaximums des vorangegangenen Einzelsystems beträgt.
8. Magnetsystem nach den Ansprüchen 1 bis 7 dadurch gekennzeichnet, daß die weichmagnetischen Joche des ersten und zweiten Teiles des Richtsystems eine Sättigungsmagnetisierung von über 1,8 Tesla aufweisen.
9. Magnetsystem nach den Ansprüchen 1, 3 bis 8 dadurch gekennzeichnet, daß ein Einzelsystem des zweiten Teiles des Richtsystems aus einer quermagnetisierten, permanentmagnetischen Platte besteht, die einen mindestens 6 mm breiten Schlitz aufweist, durch dessen Mitte senkrecht zur Plattenoberfläche die Folie geführt ist.
10. Magnetsystem nach den Ansprüchen 1, 3 bis 9 dadurch gekennzeichnet, daß das zweite Teilsystem durch Permanentmagnete, deren Pole gleichnamig gegenüberstehen, gebildet ist.

**Claims**

1. Magnetic arrangement for orientating the magnetic primary axes of pigment particles in a magnetic, binder-containing dispersion applied to a layer support, in the direction of travel of the layer support by casting machines, consisting of permanent magnets and low-retentivity elements for conducting the magnetic flux, which arrangement is composed of a combination of two orientating systems, one of the orientating systems acting on the dispersion from one side through the layer support and having a markedly curved configuration of the magnetic field lines and the other orientating system being arranged in a mirror image fashion in relation to the direction of travel of the layer support and having field lines running essentially parallel to the direction of travel of the layer support, characterised in that
— as the first orientating system, the field of a one-sidedly arranged magnet acts on the dispersion,

8

which field has an intensity of between 1,600 and 16,000 A/cm, is at least twice as large as the coercive field of the pigment particles and is concentrated over a maximum cross-section of $5 \times 5$ mm², wherein the field lines have a strong field gradient and the field produces, as the layer support lies adjacent to the slit, a main direction of the magnetisation vectors of the particles which is orientated obliquely to the direction of travel of the layer support and along a plane which is determined by the direction of travel of the layer support and the layer normal and

— the subsequent second orientating system, having a magnetic field acting parallel to the direction of travel, has a field intensity of between 400 and 2,400 A/cm and a size of at least 5 mm in the direction of travel of the layer support and the magnets arranged in a mirror image fashion in relation to the direction of travel of the layer support are at a distance of at least 3 mm from the layer support.

2. Magnetic system according to Claim 1, characterised in that the first part of the orientating system consists of a bar-shaped permanent magnet.

3. Magnetic system according to Claim 1, characterised in that the field of the second partial system coincides with the direction of the longitudinal component on the plane of symmetry of the slit of the first magnetic partial system.

4. Magnetic system according to Claim 3, characterised in that the second field half of the second partial system is arranged in a region in which the pigment particles have already been fixed.

5. Magnetic system according to Claim 1 to 4, characterised in the second partial orientating system is made up of two or more individual systems to extend the field effect.

6. Magnetic system according to Claim 5, characterised in that the field peaks of the individual systems of the second part of the orientating system decrease in an even manner as the distance from the casting device increases.

7. Magnetic system according to Claim 5 to 7, characterised in that the field peak of an individual system amounts to only 20 % of the field peak of the preceding individual system as the distance increases.

8. Magnetic system according to Claims 1 to 7, characterised in that the low-retentivity yokes of the first and second part of the orientating system have a saturation magnetisation exceeding 1.8 tesla.

9. Magnetic system according to Claims 1 and 3 to 8, characterised in that an individual system of the second part of the orientating system consists of a transversely magnetised permanently magnetic plate which has a slit which is at least 6 mm wide through the centre of which the film is guided perpendicularly to the plate surface.

10. Magnetic system according to Claims 1 and 3 to 9, characterised in that the second partial system is formed by permanent magnets whose like poles face each other.

**Revendications**

1. Dispositif magnétique pour l'orientation, suivant le sens de déroulement du support de couche sur des machines à couler, des axes magnétiques préférentiels des particules de pigment d'une dispersion magnétique, comportant un liant et déposée sur le support, ledit dispositif étant constitué par des aimants permanents et des éléments magnétiques doux pour la conduction du flux magnétique, et réalisé par la combinaison de deux systèmes d'orientation, dont un agit par un côté sur la dispersion, à travers le support de couche, et présente un tracé à forte courbure des lignes de champ magnétiques, et le second système d'orientation est disposé symétriquement par rapport au sens de déroulement du support de couche et présente des lignes de champ sensiblement parallèles au sens de déroulement du support de la couche, ledit dispositif étant caractérisé en ce que :

— le premier système d'orientation agissant sur la dispersion est constitué par le champ d'un aimant disposé sur un côté, d'une intensité comprise entre 1 600 et 16 000 A/cm, et au moins double du champ coercitif des particules de pigment, et se concentrant sur une section maximale de $5 \times 5$ mm², les lignes de champ présentant un fort gradient et le champ produisant sur le support de couche appliqué sur l'entrefer une direction principale des vecteurs d'aimantation des particules, inclinée par rapport au sens de déroulement des supports de couche dans un plan fixé par le sens de déroulement du support et la normale à la couche ; et

— le second système d'orientation en aval produit un champ magnétique agissant parallèlement au sens de déroulement, d'une intensité comprise entre 400 et 2 400 A/cm et d'une étendue minimale de 5 mm suivant le sens de déroulement du support de couche ; et les aimants disposés symétriquement par rapport au sens de déroulement du support de couche présentent une distance minimale de 3 mm audit support.

2. Système magnétique selon revendication 1, caractérisé en ce que la première partie du système d'orientation est constituée par un aimant permanent en forme de barreau.

3. Système magnétique selon revendication 1, caractérisé en ce que le champ du second système partiel coïncide avec la direction de la composante longitudinale dans le plan de symétrie de l'entrefer du premier système magnétique partiel.

4. Système magnétique selon revendication 1, caractérisé en ce que la seconde moitié du champ du second système partiel se situe dans une zone où le fixage des particules de pigment a déjà eu lieu.

5. Système magnétique selon revendications 1 à 4, caractérisé en ce que le second système partiel d'orientation est constitué par deux ou plusieurs systèmes individuels afin de prolonger la zone d'action du champ.

6. Système magnétique selon revendication 5, caractérisé en ce que les maximums du champ des systèmes individuels de la seconde partie du système d'orientation présentent une décroissance monotone quand la distance à la poche de coulée augmente.

7. Système magnétique selon revendications 5 à 7, caractérisé en ce que le maximum du champ d'un système individuel ne représente que 20 % du maximum de champ du système individuel précédent quand la distance augmente.

8. Système magnétique selon revendications 1 à 7, caractérisé en ce que les culasses magnétiques douces de la première et de la seconde partie du système d'orientation présentent une aimantation de saturation supérieure à 1,8 tesla.

9. Système magnétique selon revendications 1 et 3 à 8, caractérisé en ce qu'un système individuel de la seconde partie du système d'orientation est constitué par une plaque en aimant permanent, aimantée transversalement et présentant une fente d'une largeur minimale de 6 mm, au centre de laquelle le film est guidé perpendiculairement à la surface de la plaque.

10. Système magnétique selon revendications 1 et 3 à 9, caractérisé en ce que le second système partiel est constitué par des aimants permanents dont les pôles de même nom sont en regard.

Fig. 1

Fig. 2

Fig. 3

Fig. 4

Fig. 5

**Fig. 6**

**Fig. 7**

3